# EUROPEAN PATENT APPLICATION

(11) **EP 2 060 615 A1**
(43) Date of publication of application: **20.05.2009**
(21) Application number: 07805879.9
(22) Date of filing: 30.07.2007
(51) Int. Cl.: C09K 11/65, C09K 11/08, C09K 11/64, G02F 1/13357

(54) **LUMINESCENT COMPOSITION, LIGHT SOURCE AND DISPLAY**

(30) Priority: 25.08.2006 JP 2006229594
(71) Applicant: Sony Corporation, Tokyo 108-0075 (JP)
(72) Inventor: TAMURA, Takashi, Tokyo 108-0075 (JP); HINO, Tomokazu, Tokyo 141-0032 (JP); KUSUNOKI, Tsuneo, Tokyo 108-0075 (JP); IGARASHI, Takahiro, Tokyo 108-0075 (JP)
(74) Representative: Müller - Hoffmann & Partner
(86) International application number: PCT/JP2007/064855
(87) International publication number: WO 2008/023538

(57) **Abstract**

The present invention is to provide a luminescent composition, a light source device, and a display device each having a phosphor for which both avoidance of the shift of the luminescence wavelength band toward the shorter wavelength side and suppression of color unevenness are achieved. A configuration is provided in which a luminescent composition having a phosphor with the same crystal structure as that of CaAlSiN₃ contains carbon at a ratio of at least 0.05 weight % or higher.

## Description

### Technical Field

The present invention relates to a luminescent composition containing a phosphor, a light source device having this luminescent composition, and a display device formed with this light source device.

### Background Art

In recent years, flat-type display devices referred to as so-called FPD (Flat Panel Display), such as liquid crystal displays, plasma displays, organic EL (Electro Luminescence) displays, are attracting attention.

In these display devices, light of respective colors (e.g. red, green, and blue) finally output from the display plane is based on white light from a light source device provided in the form of e.g. a backlight and is output via an optical device including an optical modulation mechanism such as a liquid crystal. The white light supplied from the light source device is generally made as synthetic light of plural kinds of light having different center emission wavelengths.

In such a display device, the color (e.g. one of red, green, and blue) assumed by a pixel depends on the wavelength band of light that passes through the color filter provided for the pixel. Therefore, the optical modulation mechanism included in the optical device permits output of modulated light (via the color filter) at the timing when the color assumed by the pixel should be output. Thereby, light of the predetermined color is output.

Logically, e.g. in a pixel (red pixel) provided with a red color filter, which allows the passage of only light (red light) in the wavelength band corresponding to red, the light corresponding to green and blue, of all of the light that is output and reaches the color filter through permission by the optical modulation mechanism, is blocked by the color filter.

However, in a practical display device, a phenomenon occurs in which light of a certain color is output although the output thereof is unnecessary at this timing. Specific examples of such a phenomenon include the case in which green light is output although the output thereof is unnecessary and output of red light is desired.

If e.g. red light as one of plural kinds of light supplied from a light source device has a luminescence spectrum that extends to the green range, such a phenomenon will occur due to the leakage of a part of light from a red pixel into a green pixel and consequent output of the green component of the light via a green color filter.

As a light emitter included in the above-described light source device such as a backlight, configurations employing a phosphor whose luminescence wavelength band can be varied depending on the kinds of the constituting elements and selection of the composition ratio thereof are attracting attention. Among them, the combination of a phosphor excited by blue light and a blue light source (so-called white LED (Light Emitting Diode)) is attracting attention particularly. However, also regarding the light source device based on such a phosphor, the same problem relating to the above-described phenomenon has been pointed out.

In recent years, as a phosphor that is excited by blue light and has a luminescent center in the red region, there has been proposed a phosphor that has a configuration obtained by adding a luminescent center to an inorganic crystal having the same crystal structure as that of the CaSiAlN₃ crystal (refer to e.g. Japanese Patent Laid-open No. 2006-8721). In addition, there has also been a white LED obtained by adding a blue light source to a mixture of such a phosphor and another phosphor (refer to e.g. Japanese Patent Laid-open No. 2005-235934). However, oxygen is prone to remain in the red luminescent phosphors described in these documents. If oxygen is contained in this kind of phosphor, although possibly the high temperature resistance and the luminance are slightly enhanced, the luminescence spectrum is biased (shifted) toward the shorter wavelength side, and thus the above-described phenomenon (e.g. output of green light) occurs prominently.

Furthermore, such a problem in the phosphor becomes particularly serious as long as it is attempted to obtain the final phosphor not in a bulk (lump) state but in e.g. a granular state based on a large number of powders.

For the granular phosphor, first, the luminescence spectrum is greatly shifted toward the shorter wavelength side if the oxygen concentration is higher than a certain value. On the other hand, if the oxygen concentration is set lower than a certain value, the oxygen concentrations of the large number of granular phosphors easily become uneven and thus difference in the oxygen concentration arises among the individual granular phosphors. This will cause color unevenness in the light source device and the display device. That is, for the phosphors and inorganic substances described in Japanese Patent Laid-open No. 2006-8721 and Japanese Patent Laid-open No. 2005-235934, extreme reduction in the oxygen concentration of the granular phosphor causes this new problem.

Such a problem in the granular phosphor not only makes it difficult to manufacture the manufacturing light source device and the display device but also significantly deteriorates the characteristics of these devices.

Specifically, for the granular phosphor, it is desired to suppress color unevenness while avoiding the shift of the luminescence wavelength band toward the shorter wavelength side due to oxygen.

The present invention is made in view of such a problem, and an object thereof is to provide a luminescent composition that contains a phosphor and for which avoidance of the shift of the luminescence wavelength band of this phosphor toward the shorter wavelength side and suppression of color unevenness of the phosphor are achieved, a light source device having this luminescent composition, and a display device formed with this light source device.

### Disclosure of Invention

A luminescent composition according to the present invention has a phosphor that contains at least an M element, an A element, a D element, an E element, and an X element (M denotes one kind or two or more kinds of elements selected from a group consisting of Mn, Ce, Pr, Nd, Sm, Eu, Tb, Dy, Ho, Er, Tm, and Yb, A denotes one kind or two or more kinds of elements selected from a group consisting of divalent metal elements other than the M element, D denotes one kind or two or more kinds of elements selected from a group consisting of tetravalent metal elements, E denotes one kind or two or more kinds of elements selected from a group consisting of trivalent metal elements, and X denotes one kind or two or more kinds of elements selected from a group consisting of N and F). The luminescent composition is characterized in containing carbon at a ratio of 0.05 weight % (wt%) or higher.

The carbon contained in this luminescent composition at a ratio of at least 0.05 weight % or higher is the sum of carbon captured in the crystal structure and carbon that is not captured in the crystal structure. As described later, due to the configuration in which carbon is added to the phosphor at the predetermined ratio, sufficient and uniform reduction of the oxygen that remains in the crystal structure of the phosphor is achieved.

A light source device according to the present invention has at least a blue light source and a luminescent composition excited by blue light from this blue light source. The light source device is characterized in that the luminescent composition has a phosphor that contains at least an M element, an A element, a D element, an E element, and an X element (M denotes one kind or two or more kinds of elements selected from a group consisting of Mn, Ce, Pr, Nd, Sm, Eu, Tb, Dy, Ho, Er, Tm, and Yb, A denotes one kind or two or more kinds of elements selected from a group consisting of divalent metal elements other than the M element, D denotes one kind or two or more kinds of elements selected from a group consisting of tetravalent metal elements, E denotes one kind or two or more kinds of elements selected from a group consisting of trivalent metal elements, and X denotes one kind or two or more kinds of elements selected from a group consisting of N and F), and the luminescent composition contains carbon at a ratio of 0.05 weight % or higher.

A display device according to the present invention includes a light source device and an optical device. The light source device has at least a blue light source and a luminescent composition excited by blue light from this blue light source. The optical device carries out predetermined modulation for light from the light source device and outputs predetermined output light. The display device is characterized in that the luminescent composition in the light source device has a phosphor that contains at least an M element, an A element, a D element, an E element, and an X element (M denotes one kind or two or more kinds of elements selected from a group consisting of Mn, Ce, Pr, Nd, Sm, Eu, Tb, Dy, Ho, Er, Tm, and Yb, A denotes one kind or two or more kinds of elements selected from a group consisting of divalent metal elements other than the M element, D denotes one kind or two or more kinds of elements selected from a group consisting of tetravalent metal elements, E denotes one kind or two or more kinds of elements selected from a group consisting of trivalent metal elements, and X denotes one kind or two or more kinds of elements selected from a group consisting of N and F), and the luminescent composition in the light source device contains carbon at a ratio of 0.05 weight % or higher.

The luminescent composition according to the present invention contains carbon at a ratio of at least 0.05 weight % or higher. Therefore, both avoidance of the shift of the luminescence wavelength band of the phosphor toward the shorter wavelength side and suppression of color unevenness of the phosphor are achieved due to sufficient and uniform reduction of the oxygen that remains in the crystal structure of the phosphor.

In the light source device according to the present invention, the luminescent composition in the device contains carbon at a ratio of 0.05 weight % or higher. Therefore, enhancement in the characteristics of the light source device is achieved due to avoidance of the shift of the luminescence wavelength band of the phosphor toward the shorter wavelength side and suppression of color unevenness of the phosphor.

In the display device according to the present invention, the luminescent composition in the device contains carbon at a ratio of 0.05 weight % or higher. Therefore, enhancement in the characteristics of the display device is achieved due to avoidance of the shift of the luminescence wavelength band of the phosphor toward the shorter wavelength side and suppression of color unevenness of the phosphor.

### Brief Description of Drawings

[FIG. 1]

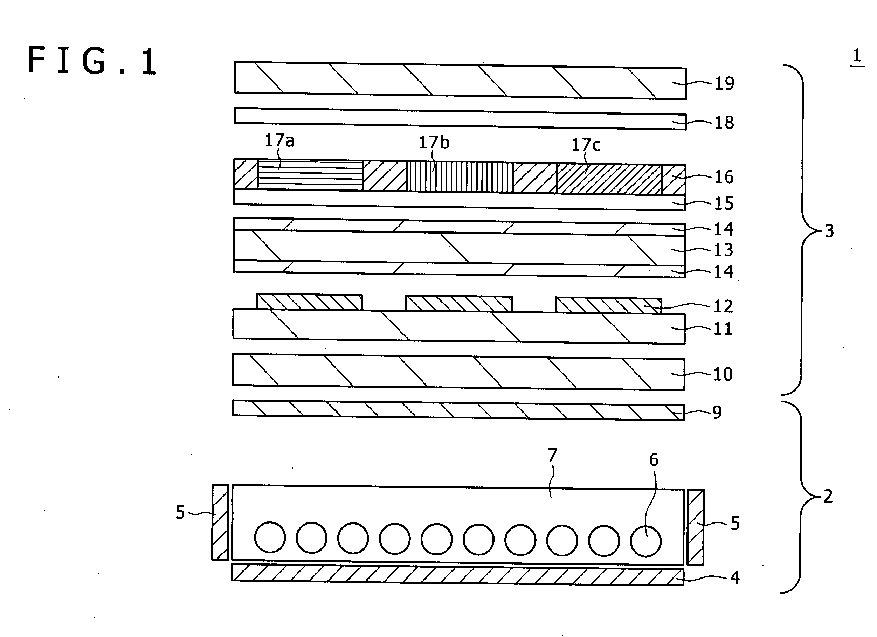

   FIG. 1 is a schematic configuration diagram showing the configuration of one example of a light source device having the luminescent composition according to the present invention and a display device formed with this light source device.
[FIG. 2]

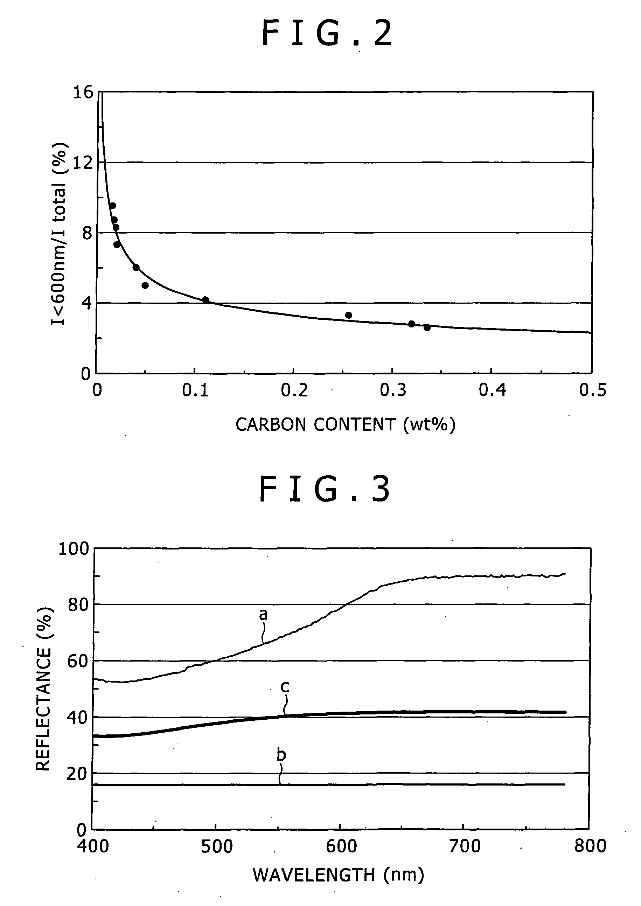

   FIG. 2 is a schematic diagram that is used to explain one example of the luminescent composition according to the present invention and shows the relationship between the carbon content and the luminescence characteristic.
[FIG. 3]
   FIG. 3 is a schematic diagram that is used to explain one example of the luminescent composition according to the present invention and is used to explain the reflectance characteristic.

### Best Mode for Carrying Out the Invention

An embodiment of the present invention will be described below with reference to the drawings.

FIG. 1 shows a schematic configuration diagram of a display device having a light source device according to the present embodiment.

This display device 1 according to the present embodiment has a light source device 2 and an optical device 3.

The light source device 2 according to the present embodiment is a backlight device for the optical device 3 having a liquid crystal device.

In a light guide unit 7 composed of a resin in this light source device 2, light emitters 6 formed by applying a resin containing plural kinds of phosphors (not shown) on the surface of a blue light source formed of e.g. a blue LED are provided. In the present embodiment, among the plural kinds of phosphors in the light emitter 6, at least one kind of phosphor (hereinafter, referred to as the first phosphor) is a luminescent composition to which carbon is added at a ratio of 0.05 weight % (wt%) or higher. This luminescent composition is defined as the luminescent composition according to the present embodiment.

A diffusion sheet 9 is provided at the part, of the light source device 2, opposed to and closest to the optical device 3. This diffusion sheet 9 is to guide light from the blue light source and the respective phosphors toward the optical device 3 evenly in a planar manner. A reflector 4 is provided on the backside of the light source device 2. Furthermore, according to need, a reflector 5 similar to the reflector 4 is also provided on the side surfaces of the light guide unit 7.

As the resin of the light guide unit 7, epoxy, silicone, urethane, and other various transparent resins can be used. In addition, as the shape of the blue light source of the light emitter 6, an appropriate shape can be selected from various kinds of shapes such as a side-emitter type and a bullet type are used.

On the other hand, in the present embodiment, the optical device 3 is a liquid crystal device that modulates light from the light source device 2 to thereby output predetermined output light.

In this optical device 3, the following components are disposed in the following order from the light source device 2 side: a polarizer 10; a glass substrate 11 for TFT (Thin Film Transistor); dot-shape electrodes 12 on the surface of the glass substrate 11; a liquid crystal layer 13; alignment films 14 applied on both the surfaces of the liquid crystal layer 13; an electrode 15; plural black matrices 16 on the electrode 15; a first (red) color filter 17a, a second (green) color filter 17b, and a third color filter 17c that are provided between the black matrices 16 and each correspond to a pixel; a glass substrate 18 provided separately from the black matrices 16 and the color filters 17a to 17c; and a polarizer 19.

The polarizers 10 and 19 are to form light that oscillates in specific directions. The TFT glass substrate 11, the dot electrodes 12, and the electrode 15 are provided for switching of the liquid crystal layer 13, which allows the passage of only the light that oscillates in the specific directions. Combining the alignment films 14 with the liquid crystal layer 13 allows the inclination of liquid crystal molecules in the liquid crystal layer 13 to be aligned along a certain direction. Furthermore, through the provision of the black matrices 16, the contrast of light output from the color filters 17a to 17c corresponding to the respective colors is enhanced. These black matrices 16 and the color filters 17a and 17c are attached to the glass substrate 18.

In the light source device 2 according to the present embodiment, the first phosphor in the luminescent composition of the light emitter 6 is a phosphor containing at least an M element, an A element, a D element, an E element, and an X element.

M denotes one kind or two or more kinds of elements selected from the group consisting of Mn, Ce, Pr, Nd, Sm, Eu, Tb, Dy, Ho, Er, Tm, and Yb. A denotes one kind or two or more kinds of elements selected from the group consisting of the divalent metal elements other than the M element. D denotes one kind or two or more kinds of elements selected from the group consisting of the tetravalent metal elements. E denotes one kind or two or more kinds of elements selected from the group consisting of the trivalent metal elements. X denotes one kind or two or more kinds of elements selected from the group consisting of N and F.

It is preferable for M to contain Eu, and it is more preferable for M to be Eu.

Furthermore, it is preferable for A to be one kind or two or more kinds of elements selected from the group consisting of Mg, Ca, Sr, and Ba, and it is more preferable for A to be Ca.

In addition, it is preferable for D to be one kind or two or more kinds of elements selected from the group consisting of Si, Ge, Sn, Ti, Zr, and Hf, and it is more preferable for D to be Si.

Moreover, it is preferable for E to be one kind or two or more kinds of elements selected from the group consisting of B, Al, Ga, In, Sc, Y, La, Gd, and Lu, and it is more preferable for E to be Al.

In the luminescent composition according to the present embodiment, it is preferable that the element X of the first phosphor be N. As the element equivalent to this X, oxygen (O) is also positively selected for conventional phosphors. However, in the luminescent composition according to the present embodiment, the amount of oxygen is suppressed to such one that reduction of oxygen is achieved but oxygen still remains as described later, to thereby avoid the shift of the luminescence wavelength band of the phosphor toward the shorter wavelength side and suppress color unevenness of the phosphor.

Specifically, as the particularly-preferable element configuration of the first phosphor, the following configuration will be available. Specifically, the element X of the phosphor is N. In addition, as for the other elements, the M element is Eu, the A element is Ca, the D element is Si, and the E element is Al. The major crystal of the phosphor in the luminescent composition according to the present embodiment is any of a crystal represented by the general formula CaAlSiN₃, a crystal having the same crystal structure as that of this crystal, and a phosphor equivalent to a solid solution of any of these crystals. This major crystal exhibits particularly-high luminance (CaAlSiN₃ group crystal). Besides this CaAlSiN₃ group crystal, other phases such as an AlN phase and a Ca-Si-O-N phase may be contained in the phosphor.

The luminescent composition according to the present embodiment contains carbon at a ratio of at least 0.05 weight % or higher. Therefore, as described later, both avoidance of the shift of the luminescence wavelength band of the phosphor toward the shorter wavelength side and suppression of color unevenness of the phosphor are achieved due to sufficient and uniform reduction of the oxygen that remains in the crystal structure of the phosphor.

Furthermore, in the light source device according to the present embodiment and the display device according to the present embodiment, having this light source device, the luminescent composition in the light source device contains carbon at a ratio of 0.05 weight % or higher. Therefore, enhancement in the characteristics of the devices is achieved due to avoidance of the shift of the luminescence wavelength band of the phosphor toward the shorter wavelength side and suppression of color unevenness of the phosphor. <Working Example>

A working example of the present invention will be described below.

Initially, a method for fabricating a luminescent composition according to the present working example will be specifically described below.

In the fabrication of the luminescent composition according to the present working example, initially Si₃N₄, AlN, Ca₃N₂, and EuN were mixed at a molar ratio of 1 : 3 : 0.985 : 0.045 and 10 g of this mixture was prepared through weighing.

Next, carbon powders were prepared through weighing separately from the previously-prepared 10 g mixture based on the total number of moles of Si₃N₄, AlN, Ca₃N₂, and EuN in this mixture so that an intermediate to be described later might have the predetermined carbon content finally. Specifically, the predetermined amount of carbon powders with respect to the total number of moles of the previously-prepared 10 g mixture was prepared through weighing (the predetermined amount was selected from the amounts obtained by multiplying the total number of moles of the mixture by the values in the range of 0 to 1). The amount of the carbon contained in the finally-obtained luminescent composition will vary depending on the amount of these carbon powders prepared through weighing and the condition of the subsequent steps (firing and so on).

The mixture and carbon powders prepared through weighing were mixed for 20 minutes by using an agate mortar in a glove box in a nitrogen atmosphere, so that the intermediate was prepared.

The mixture powders as the obtained intermediate were inserted into a cylindrical crucible made of boron nitride (BN). The mixture powders inserted into the crucible were held at a temperature of 1700°C (firing) for two hours in a mixture gas atmosphere of a nitrogen gas (N₂) and a hydrogen gas (H₂), so that the luminescent composition according to the present working example was fabricated.

Next, a description will be made below about the results of studies on characteristics, made for plural luminescent compositions (samples) fabricated with variation in the carbon content.

Initially, the result of the study based on measurement of the carbon content and measurement of the luminescence spectrum for each sample will be described below.

The measurement of the carbon content was performed by using a carbon analyzer (EMIA-520, produced by Horiba, Ltd.). In this carbon analyzer, the carbon amount in a sample is measured through infrared gas analysis of the concentration of CO₂ generated due to the burning of the measurement target. On the other hand, the measurement of the luminescence spectrum was performed by using a spectrophotometer (FLUOROLOG-3, produced by SPEX Corporation). By using this spectrophotometer, the respective luminescent compositions were irradiated with blue light having a center emission wavelength of 460 nm and the luminescence spectra generated from the luminescent compositions due to excitation by the blue light were measured about the range of 500 nm to 780 nm.

The result of the measurement of the carbon content and the luminescence spectrum is shown in FIG. 2. On the ordinate, the ratio of the intensity occupied by the luminescence component in the range of 500 nm to 600 nm relative to the luminescence spectrum obtained by the spectrophotometer (I<600nm/Itotal) is plotted. If this ratio is lower, the amount of the short wavelength component in the light from the phosphor is smaller. Therefore, for example, the amount of the light that passes through a green color filter in the display device will be decreased, and thus the luminescence characteristic of the luminescent composition will be favorable.

From the result of FIG. 2, a tendency that I<600nm/Itotal decreases as the carbon content increases can be confirmed. Furthermore, it has become apparent that the luminescence characteristic of the luminescent composition can be made sufficiently favorable particularly when carbon content of 0.04 weight % (wt%) or higher is selected. Carbon content of 0.05 weight % or higher is particularly preferable because I<600nm/Itotal can be made lower than 5%.

Next, the result of the study based on measurement of the reflectance for each sample will be described below.

The luminescent composition according to the present working example contains carbon in addition to the phosphor. However, the luminescent composition that contains an extremely-large amount of carbon involves a possibility that excitation light to the phosphor and luminescence from the phosphor are absorbed by the carbon. The lowering of the reflectance occurs due to absorption of light by carbon and so on. Therefore, it is desirable that reflectance higher than a certain level be kept over a wide wavelength band, for keeping and enhancing of the luminescence intensity, which is important when a light source device and a display device are formed, and so on. That is, the present study was made based on an idea that it will be preferable to limit the carbon content to a specific amount or smaller in order to ensure reflectance higher than a certain level.

The measurement of the reflectance was performed by using a spectrophotometer (V-560, manufactured by JASCO Corporation). By using this spectrophotometer, the respective luminescent compositions were irradiated with light having a center emission wavelength in the range of 400 nm to 780 nm and the reflectances thereof were measured.

FIG. 3 shows the result of the measurement of the reflectance. For the sample with carbon content of 0.3 weight % (a in FIG. 3), comparatively-high reflectance is kept in the whole of the wavelength band of the measurement. In contrast, for the sample with carbon content of 5.1 weight % (b in FIG. 3), the reflectance is lower than 20% in the entire wavelength band.

On the other hand, for the sample with carbon content of 1.0 weight % (c in FIG. 3), the reflectance is higher than 40% in a wavelength band wider than half of the entire wavelength band although the reflectance is low as a whole. At least 40% or higher is needed as the reflectance characteristic required in products such as the light source device and the display device. Therefore, from this result of the reflectance measurement, it has become apparent that it is preferable to set the carbon content to 1.0 weight % or lower.

As described above, the luminescent composition according to the present embodiment contains carbon at a ratio of at least 0.05 weight % or higher. Therefore, both avoidance of the shift of the luminescence wavelength band of the phosphor toward the shorter wavelength side and suppression of color unevenness of the phosphor are achieved due to sufficient and uniform reduction of the oxygen that remains in the crystal structure of the phosphor.

Furthermore, in the light source device according to the present embodiment, the luminescent composition in the device contains carbon at a ratio of 0.05 weight % or higher. Therefore, enhancement in the characteristics of the light source device is achieved due to avoidance of the shift of the luminescence wavelength band of the phosphor toward the shorter wavelength side and suppression of color unevenness of the phosphor.

In addition, in the display device according to the present embodiment, the luminescent composition in the device contains carbon at a ratio of 0.05 weight % or higher. Therefore, enhancement in the characteristics of the display device is achieved due to avoidance of the shift of the luminescence wavelength band of the phosphor toward the shorter wavelength side and suppression of color unevenness of the phosphor.

For the luminescent composition according to the present embodiment, the oxygen concentration is decreased evenly for a large number of granular light emitters due to added carbon, i.e. due to gas carbon generated in the firing process in the fabrication of the luminescent composition. Therefore, the oxygen amount is suppressed by the carbon to such an amount or smaller that reduction of oxygen is achieved but oxygen still remains. This allows the avoidance of the shift of the luminescence wavelength band of the phosphor toward the shorter wavelength side and the suppression of color unevenness of the phosphor. The reduction in the oxygen amount in the luminescent composition according to the present embodiment will be achieved not only due to the decrease of the oxygen itself contained in the crystal structure but also due to the decrease of the oxygen-containing phase accompanying the decrease of oxygen in the synthesis process.

Furthermore, suppression of color unevenness will be achieved also in the light source device and the display device having such a luminescent composition.

Furthermore, for the luminescent composition according to the present embodiment, particularly if the phosphor in this luminescent composition (the first phosphor, in the above-described example) is a so-called red luminescent phosphor having the center emission wavelength (the peak of the luminescence spectrum) closer to the longer wavelength side than 600 nm, the avoidance of the shift toward the shorter wavelength side allows enlargement of the range of the producible color (color gamut) dependent on combination with another phosphor. Therefore, the light source device according to the present embodiment and the display device according to the present embodiment are allowed to have particularly-excellent characteristics due to the enlargement of the color gamut and the above-described suppression of color unevenness, if the phosphor in the luminescent composition according to the present embodiment is a red phosphor.

Furthermore, the green component in red light is reduced due to the avoidance of the shift of the center emission wavelength of the red phosphor toward the shorter wavelength side. Thus, also in output of green light, the lowering of the chromaticity of green is suppressed. If the lowering of the chromaticity of green is suppressed, further enhancement in the characteristics of the light source device and the display device is expected.

In the present embodiment, the center emission wavelength of red light is regarded as a wavelength of 600 nm or longer. This wavelength is selected as the reference value based on the correlation between plural kinds of light supplied from the light source device to the optical device and the transmission characteristics of the color filters corresponding to the respective colors, i.e. based on effects in terms of practical use, such as productization, for configurations such as the display device (refer to e.g. Japanese Patent Laid-open No. 2005-331937, Monthly Display, 2005, the July issue, p. 37, and Convertech, 1996, 9, p. 49). Specifically, considering the characteristics of color filters that are generally used, the above-described color gamut enlargement will be particularly expected due to carbon introduction like that in the present embodiment, if the center emission wavelength of red light is equal to or longer than 600 nm.

The luminescent composition according to the present embodiment has a red body color, and therefore can be used as a red pigment or a red fluorescent pigment.

Furthermore, a red body color is observed when the luminescent composition according to the present embodiment is irradiated with sunlight or illumination from a fluorescent lamp or the like. The color representation thereof is favorable and free from deterioration over a long time, and therefore this luminescent composition is suitable as an inorganic pigment. Thus, when the luminescent composition is used as a coating material, ink, paint, a glaze, a colorant added to a plastic product, and so on, an advantage that the color representation is not deteriorated over a long time is achieved.

Moreover, among the luminescent compositions according to the present embodiment, particularly one containing nitrogen absorbs ultraviolet rays and thus is suitable also as an ultraviolet absorber. Thus, when this luminescent composition is used as a coating material or it is applied on the surface of a plastic product or mixed into the inside thereof, the effect to block ultraviolet rays will be high and the effect to protect the product against deterioration attributed to ultraviolet rays will be high.

This is the end of the description of the embodiment of the luminescent composition, the light source device, and the display device according to the present invention. The used materials, the amounts thereof, and numerical conditions such as the treatment times and the sizes, cited in the above description, are merely preferred examples, and the sizes and shapes and the arrangement relationship in the respective diagrams used for the description are also schematic. That is, the present invention is not limited to this embodiment.

For example, for the above-described embodiment, the description has been made by taking as an example the case in which the first phosphor is excited by blue light. However, the phosphor in the luminescent composition according to the present invention may be one excited by ultraviolet light.

Furthermore, an example based on carbon analysis has been taken for the above-described embodiment. However, it is also possible to employ another analysis method such as ICP (Inductively Coupled Plasma).

In addition, the configuration of the display device is also not limited to the above-described one, but e.g. an edge-light type device configuration can also be employed. Like this, various changes and modifications can be made for the present invention.

## Claims

1. A luminescent composition having a phosphor that contains at least an M element, an A element, a D element, an E element, and an X element (M denotes one kind or two or more kinds of elements selected from a group consisting of Mn, Ce, Pr, Nd, Sm, Eu, Tb, Dy, Ho, Er, Tm, and Yb, A denotes one kind or two or more kinds of elements selected from a group consisting of divalent metal elements other than the M element, D denotes one kind or two or more kinds of elements selected from a group consisting of tetravalent metal elements, E denotes one kind or two or more kinds of elements selected from a group consisting of trivalent metal elements, and X denotes one kind or two or more kinds of elements selected from a group consisting of N and F), wherein
containing carbon at a ratio of at least 0.05 weight % or higher.

2. The luminescent composition according to claim 1, wherein
said phosphor is excited by ultraviolet light or blue light.

3. The luminescent composition according to claim 1, wherein
said phosphor has a center emission wavelength closer to a longer wavelength side than 600 nm.

4. A light source device that has at least a blue light source and a luminescent composition excited by blue light from said blue light source, wherein
said luminescent composition has a phosphor that contains at least an M element, an A element, a D element, an E element, and an X element (M denotes one kind or two or more kinds of elements selected from a group consisting of Mn, Ce, Pr, Nd, Sm, Eu, Tb, Dy, Ho, Er, Tm, and Yb, A denotes one kind or two or more kinds of elements selected from a group consisting of divalent metal elements other than the M element, D denotes one kind or two or more kinds of elements selected from a group consisting of tetravalent metal elements, E denotes one kind or two or more kinds of elements selected from a group consisting of trivalent metal elements, and X denotes one kind or two or more kinds of elements selected from a group consisting of N and F), and the luminescent composition contains carbon at a ratio of 0.05 weight % or higher.

5. A display device including a light source device and an optical device, the light source device having at least a blue light source and a luminescent composition excited by blue light from said blue light source, the optical device carrying out predetermined modulation for light from said light source device and outputting predetermined output light, wherein
the luminescent composition in the light source device has a phosphor that contains at least an M element, an A element, a D element, an E element, and an X element (M denotes one kind or two or more kinds of elements selected from a group consisting of Mn, Ce, Pr, Nd, Sm, Eu, Tb, Dy, Ho, Er, Tm, and Yb, A denotes one kind or two or more kinds of elements selected from a group consisting of divalent metal elements other than the M element, D denotes one kind or two or more kinds of elements selected from a group consisting of tetravalent metal elements, E denotes one kind or two or more kinds of elements selected from a group consisting of trivalent metal elements, and X denotes one kind or two or more kinds of elements selected from a group consisting of N and F), and the luminescent composition in the light source device contains carbon at a ratio of 0.05 weight % or higher.

## Amended claims

### Amended claims under Art. 19.1 PCT

**1.** (As amended) A luminescent composition having a phosphor that contains at least an M element, an A element, a D element, an E element, and an X element (M denotes one kind or two or more kinds of elements selected from a group consisting of Mn, Pr, Nd, Sm, Eu, Tb, Dy, Ho, Er, Tm, and Yb, A denotes one kind or two or more kinds of elements selected from a group consisting of divalent metal elements other than the M element, D denotes one kind or two or more kinds of elements selected from a group consisting of tetravalent metal elements, E denotes one kind or two or more kinds of elements selected from a group consisting of trivalent metal elements, and X denotes one kind or two or more kinds of elements selected from a group consisting of N and F), wherein
containing carbon at a ratio of at least 0.08 weight % or higher.

**2.** The luminescent composition according to claim 1, wherein
said phosphor is excited by ultraviolet light or blue light.

**3.** The luminescent composition according to claim 1, wherein
said phosphor has a center emission wavelength closer to a longer wavelength side than 600 nm.

**4.** (As amended) A light source device that has at least a blue light source and a luminescent composition excited by blue light from the blue light source, wherein
siad luminescent composition has a phosphor that contains at least an M element, an A element, a D element, an E element, and an X element (M denotes one kind or two or more kinds of elements selected from a group consisting of Mn, Pr, Nd, Sm, Eu, Tb, Dy, Ho, Er, Tm, and Yb, A denotes one kind or two or more kinds of elements selected from a group consisting of divalent metal elements other than the M element, D denotes one kind or two or more kinds of elements selected from a group consisting of tetravalent metal elements, E denotes one kind or two or more kinds of elements selected from a group consisting of trivalent metal elements, and X denotes one kind or two or more kinds of elements selected from a group consisting of N and F), and the luminescent composition contains carbon at a ratio of 0.08 weight % or higher.

**5.** (As amended) A display device including a light source device and an optical device, the light source device having at least a blue light source and a luminescent composition excited by blue light from said blue light source, the optical device carrying out predetermined modulation for light from the light source device and outputting predetermined output light, wherein
the luminescent composition in the light source device has a phosphor that contains at least an M element, an A element, a D element, an E element, and an X element (M denotes one kind or two or more kinds of elements selected from a group consisting of Mn, Pr, Nd, Sm, Eu, Tb, Dy, Ho, Er, Tm, and Yb, A denotes one kind or two or more kinds of elements selected from a group consisting of divalent metal elements other than the M element, D denotes one kind or two or more kinds of elements selected from a group consisting of tetravalent metal elements, E denotes one kind or two or more kinds of elements selected from a group consisting of trivalent metal elements, and X denotes one kind or two or more kinds of elements selected from a group consisting of N and F), and the luminescent composition in the light source device contains carbon at a ratio of 0.08 weight % or higher.
